# EUROPEAN PATENT SPECIFICATION

(11) **EP 0 363 364 B1**
(45) Date of publication and mention of the grant of the patent: **30.06.1999**
(21) Application number: 88901983.2
(22) Date of filing: 27.01.1988
(51) Int. Cl.: B01D 67/00, B01D 71/56

(54) **PREPARATION OF POROUS ARAMIDE MEMBRANES**
HERSTELLUNG PORÖSER ARAMID-MEMBRANEN
PREPARATION DE MEMBRANES D'ARAMIDE POREUSES

(30) Priority: 06.05.1987 US 46387
(43) Date of publication of application: 18.04.1990
(73) Proprietor: USF Filtration and Separations Group Inc., Timonium, Maryland 21093 (US)
(72) Inventor: WRASIDLO, Wolfgang, J., LaJolla, CA 92037 (US)
(74) Representative: Eyles, Christopher Thomas
(86) International application number: US8800228
(87) International publication number: WO8808738

(56) References cited:
- DE-A- 3 342 823
- FR-A- 2 197 921
- US-A- 3 817 386
- US-A- 4 567 009
- US-A- 4 629 563
- CHEMICAL ABSTRACTS, volume 98, no. 10, 7 March 1983, (Columbus, Ohio, US), see page 57, abstract 73579d, & JP,A,57 159 508 (NITTO ELECTRIC INDUSTRIAL CO. LTD) 1 October 1982.
- CHEMICAL ABSTRACTS, volume 98, no. 10, 7 March 1983, (Columbus, Ohio, US), see page 57, abstract 73578c, & JP,A,57 159 509 (NITTO ELELCTRIC INDUSTRIAL CO., LTD) 1 October 1982
- ACS Symposium Series 153, Synthetic Membranes, volume 1, 1981, edited by A.F. Turbak, D.R. Lloyd et al.: "Poly(aryl ether) membranes for reverse osmosis", pages 327-350

## Description

### TECHNICAL FIELD

This invention relates to the production of fully aromatic (aramid) polyamides in the form of porous membranes and is more particularly related to a dope or casting emulsion utilized in the wet process casting of porous, asymmetric membranes from such aramid polymers.

### BACKGROUND ART

Fully aromatic polyamides are known to possess properties such as superior tear strength, bulk modulus, thermal resistance, moisture resistance, and chemical stability, which make them one of the most versatile and highly desirable classes of polymers for membrane filtration. It is, however, difficult to prepare membrane casting dopes from such polymers, since they are essentially insoluble in most common organic solvents and only moderately soluble in certain amide solvents (e.g., dimethylformamide and dimethylacetamide), when employed in conjunction with inorganic solubilizing agents. Nevertheless, integrally skinned, hyperfiltration membranes have been produced from aromatic polyamides, as shown in US-A-3,567,632.
Although the desirability of producing porous membranes composed of aramid resins was recognized, the production of such membranes had generally been limited to what the art refers to as "hyperfiltration" membranes, i.e., those which are essentially nonporous and/or have molecular weight cut-offs of less than 30̸0̸. Recently, however, processes have been disclosed for the production of more open membranes from aromatic polyamides.
JP-A-57-15950̸9 discloses a process for producing membranes with enhanced permeability (i.e., what appears to be ultrafiltration-type membranes) by the addition of an organic swelling agent to a "conventional" polyamide solution, in which the polyamide resin has been solubilized in an aprotic, amide solvent and an inorganic solubilizing agent. In US-A-4627992 (equivalent to DE-A-3342823) there is disclosed a process for the production of filter elements based on an aromatic polyamide in which a semi-finished filter element is produced from a solution of the polyamide in an aprotic solvent, such as dimethylformamide, or dimethylacetamide, and the polyamide is then coagulated by immersion in a liquid bath containing a precipitating agent. The resulting filter elements are said to have a pore size of from 0.05 µm to 10 µm if a pore former, such as ethylene glycol or a polyethylene glycol having a molecular weight up to 400, is added to the polyamide solution in an amount ranging from 1% up to the limit of solution stability of the polyamide, if from 35 to 55% by weight of the same solvent as is used in making the polyamide solution is added to the precipitation and coagulation bath and if from 1 to 40% by weight of the same pore former (but not more than the percentage by weight of pore former in the polyamide solution) is also added to the precipitation and coagulation bath. The polyamide content of the polyamide solution and the temperature and water content of the coagulation and precipitation bath can be used as controllable process parameters. In this process symmetric or asymmetric membranes can be formed. It is further taught that if the precipitation and coagulation bath contains no pore former at all, a closed surface surface skin is formed on the semi-finished filter element but the addition of solvents and pore formers to the precipitation and coagulation bath ensures virtual elimination of closed surface skin and produces instead a porous surface on the semi-finished filter element. This effect is assisted by the high viscosity of the pore former.

US-A-4,567.009 discloses a process for producing truly porous microfiltration membranes. The process disclosed therein is, however, limited to the casting of such membranes by what is termed the "dry" process of phase-inversion casting. In phase-inversion casting, the casting dope is spread in a film over a smooth surface and the solvent is initially evaporated from the film. In the "wet" process, the film or nascent membrane is then passed through a quenching solution, e.g., water, to extract the water miscible components from the membrane. In the "dry" process, both the solvent and non-solvent components of the film are essentially removed by evaporation in a humidity-controlled atmosphere. The advantage of the "dry" process, partly because of the slow evaporation, is that it provides a good degree of control of pore size -- thereby permitting the casting of a membrane with a high degree of openness. The disadvantages are that it is not generally suitable for: (i) large-scale production because of its dependence on the slow evaporation process -- generally conducted at about room temperature; and (ii) the production of asymmetrical membranes which are known to provide, at any given pore size, substantially higher flow rates and greater throughput before plugging. It would therefore be desirable to have a means for the "wet" process production of porous membranes composed of aramid resins.

### DISCLOSURE OF INVENTION

It has now been found that porous, aramid membranes can be cast from emulsions of such aramid resins, utilizing a minimum of five components (including the resin component) to make up the casting dope.

In accordance with the invention there is provided a process for casting a membrane comprising a fully aromatic polyamide resin which comprises producing a dope by steps comprising forming a homogeneous solution of the resin in an amide solvent containing an inorganic solubilizing aid, and adding thereto a pore modifying agent which is an organic liquid which is essentially miscible with the solution, but is a non-solvent or poor solvent for the resin, casting the resulting casting dope onto a surface, and gelling the so-cast film by phase-inversion casting utilizing the wet method by passing the film or nascent membrane through a quenching liquid characterized in that the pore modifying agent is selected from aliphatic alcohols with the proviso that polyhydric alcohols are excluded, aliphatic amines, aliphatic ethers, alicyclic ethers, dioxane, methyl isobutyl ketone, nitropropane, and methoxyethanol, that the casting dope is a dispersion prepared by (i) adding the pore modifying agent to the homogeneous solution of the resin in an amount of from 40 to 150% of the weight of the solution and in an amount sufficient to permit the casting of a porous membrane exhibiting mean pores within the range of 0.05 to 3.0 µm but less than that which forms visually apparent turbidity and (ii) thereafter adding a precipitant, which is substantially miscible with the solvents already present and is selected from butyl acetate, aliphatic hydrocarbons, trichlorofluoroethane, methoxyethane, carbon tetrachloride, ethylene glycol, and water, in an amount of from 5 to 40% of the dispersion and sufficient to form a visibly turbid solution which will not separate at a moderate degree of mixing.

The invention further provides an integrally skinned, porous, fully aromatic polyamide membrane made by such a process having a porous skin portion having a pore diameter within the range of 0.05 to 3 µm and a support portion containing pores interconnecting with the skin pores, the pores in the support portion increasing in size as their distance from the skin portion increases, such that the average diameter of the largest pores is from 10 to 300 times the diameter of the skin pores.

Throughout this specification all percentages are by weight.

A homogeneous solution of the aramid resin is initially prepared by conventional procedures. For example, predetermined amounts of:
(i) an amide solvent, such as N-methyl-pyrrolidone, dimethylformamide, dimethylacetamide, or hexamethylene tetraphosphoramide, and mixtures thereof;
(ii) an inorganic solubilizing aid, such as the halides, nitrates, sulfates, and perchlorates of the alkali and alkaline earth metals, and mixtures thereof; and
(iii) the aramid resin
   are blended together to form a homogeneous solution. Generally, the solubilizing aid will be dissolved in the amide solvent, and the aramid thereafter added to the solution. It was found that if: (a) the above, three-component system were to be immersed directly into a nonsolvent gelation bath (e.g., water) for the exchange of the solvent system into the gelation bath -- the resultant membrane would be of the "hyperfiltration" type; and (b) prior to immersion into the gelation bath, a precipitant were added to the three-component system (to increase its viscosity or turbidity) -- the resultant membrane would be essentially of the "ultrafiltration" type.

To provide a casting dope capable of producing coherent, microporous (i.e., mean flow pores > 0̸.0̸5µ) membranes, two additional components are added to the basic, three-component, homogeneous solution:
(iv) a pore modifying agent -- i.e., an agent which is miscible with the three-component solution over a wide concentration range, but is nevertheless a nonsolvent or poor solvent (even after interaction with the solution) of the aromatic polyamide. In general, the pore modifying agent, although a poor solvent for the polyamide, will nevertheless act as a swelling agent thereof.
A variety of such agents (or mixtures thereof) have been found suitable to act as pore modifiers, including the aliphatic alcohols with the proviso that polyhydric alcohols are excluded or amines, and the aliphatic or alicyclic ethers; and
(v) a precipitant -- generally added in an amount sufficient to produce visually apparent (to the unaided eye) turbidity in the dope.
Suitable precipitants include butyl acetate, hexane, cyclohexane, methoxyethane, trichloro-trifluoroethane, and carbon tetrachloride. At this stage, the turbid mixture may have a tendency to separate into phases if left quiescent. Therefore, if the five-component emulsion is to remain quiescent for an appreciable time prior to casting, agitation may be required to prevent such separation, immediately prior to casting into a membrane. The emulsion or dope may thereafter be employed to cast both skinless and integrally skinned membranes. The former may be prepared by the method shown in US-A-4,340̸,479, while the latter may be prepared by the method shown in US-A-4,629,563.

### MODES FOR CARRYING OUT THE INVENTION

The membrane casting emulsions of the present invention can be prepared in a variety of ways. In one preferred method, the three-component system, similar to those which have previously been used for the preparation of "hyperfiltration" or reverse osmosis, aramid membranes, is initially prepared. An inorganic solubilizing aid (which, as suggested in the art, may include the halides, nitrates, sulfates, and perchlorates of the alkali and alkaline earth metals; the thiocyanates of such metals, and zinc or stannous chloride) is dissolved in an amide solvent in an amount sufficient to effect the dissolution of the aromatic polyamide --generally in an amount of 10̸ to 35 percent polyamide, based on the total weight of the three-component system. Of the various solubilizing aids suggested in the art, LiCl in an amount of from 2.5 to 10̸% (based on the weight of the three-component solution) is particularly preferred. The amide solvents will preferably consist of dimethylacetamide (DMAC), N-methyl-pyrrolidone, and dimethylformamide (DMF), but may also include dimethylsulfoxide and hexamethylene tetraphosphoramide, as well as mixtures of such solvents. As prepared, the initial, three-component, homogeneous solution should be optically clear.

Various organic solvents may be used as (iv) -- the pore modifying ingredient. For example, to produce a membrane having somewhat hydrophilic properties, this fourth ingredient is selected from the lower aliphatic alcohols with the proviso that polyhydric alcohols are excluded (preferably those having up to five carbons in the aliphatic chain) or the aliphatic amines. On the other hand, a membrane exhibiting somewhat hydrophobic properties will generally result from the use of ether solvents; including, for example, diethyl ether, butyl ether, tetrahydrofuran, and dioxane. Other suitable solvents include, for example, methylisobutylketone, nitropropane, and methoxyethanol. An amount of this solvent will be employed, sufficient to create a metastable condition, but less than that which would produce visually apparent turbidity. The concentration range of modifier which can be employed will, of course, vary with the specific solvent (or mixtures thereof) utilized, but as a rule of thumb, will generally be within the range of 40̸ to 150̸ percent (normally 60̸ to 120̸%), by weight, of the initial three-component system prior to the addition of the modifier.

After the four-component, metastable dispersion is formed, the fifth ingredient, i.e., the precipitant, is added to bring the liquid mixture to a state of incipient phase separation, generally indicated by visual turbidity. The precipitant should be substantially miscible with the solvents already present in the metastable dispersion. Suitable precipitants include butyl acetate, aliphatic hydrocarbons such as hexane, cyclohexane, as well as trichloro-trifluoroethane, methoxyethane, carbon tetrachloride, ethylene glycol, and water. The precipitant will be added in an amount at least sufficient to create a condition of incipient phase separation, but less than that in which a moderate degree of mixing (i.e., manual stirring) would be incapable of preventing phase separation, prior to casting. Generally, the precipitant will be added in amounts ranging from 5 to 40̸ percent, by weight, of the four-component metastable dispersion. Desirably, immediately prior to casting, the concentration of polymer will be within the range of about 4 to 8.5 percent, preferably 5 to 7 percent, of the final casting dope.

The so-prepared casting dope can be used to prepare flat or hollow-fiber, porous membranes, having mean flow pore (mfp) sizes within the range of 0̸.0̸5 to 3 µm, generally 0̸.1 to 0̸.5 µm (for skinned membrane, the mfp is that of the skin) according to conventional "wet" process phase-inversion casting techniques. For example, the turbid casting dope may be spread onto a support and either: (a) be immersed directly into a nonsolvent gelation bath, such as water; or (b) prior to such immersion, a degree of solvent removal may be achieved by vaporization for a short period of time at temperatures of the order of 70̸ to 130̸°C. The temperature of the gelation bath and the period of immersion can vary over wide limits, e.g., with bath temperatures varying from 0̸ to 45°C and immersion times varying from one minute to many hours. Desirably, the temperature of the bath will be within the range of 15 to 30̸°C.

It should be evident that there exist many variables which affect the structure of the membrane produced in accord with this invention. The essential characteristics of the casting dope are that an aramid solution (comprising at least aramid resin, amide solvent, and solubilizing aid) be substantially diluted with a miscible, pore modifying agent and thereafter be brought to a state of incipient phase separation by the addition of a non-solvent, precipitating agent. The wide compositional range for each of the five component variables and the temperature of the dope are, of course, all significant variables. The many independent variables, together with the interactions between them, make it virtually impossible to quantify the effects of any one variable. This notwithstanding, from the many experiments performed, a number of generalizations can be made:
(a) Effect of Aramid Concentration -- Both mean flow pore size and flow rate decrease as the final concentration of aramid (in the five-component dope) increases.
(b) Effect of Diluent Concentration -- An increase in the amount of component (iv), the miscible, pore modifier will produce a more open membrane, i.e., larger mean flow pore size. As a consequence, changes in other variables, which will permit the addition of larger amounts of diluent, can also be employed to effect an increase in pore size. Thus, use of a stronger, amide solvent (e.g., DMAc rather than DMF) or raising the temperature of the solution permit the addition of more diluent. However, the addition of too much diluent will provide a degree of "openness" to the extent that the membrane will no longer be coherent.
   On the other hand, the omission of the diluent component, or its use in amounts well below 40̸% of the solution, will, in either instance, produce a membrane with very fine pores.
(c) Turbidity of the Casting Dope -- Increasing turbidity of the dope produces a more open membrane. Since warming the dope will tend to decrease turbidity, increases in temperature at this stage (of the five-component dope) will decrease the pore size and flow rates of the membrane.

## Claims

1. A process for casting a membrane comprising a fully aromatic polyamide resin which comprises producing a dope by steps comprising forming a homogeneous solution of the resin in an amide solvent containing an inorganic solubilizing aid, and adding thereto a pore modifying agent which is an organic liquid which is essentially miscible with the solution, but is a non-solvent or poor solvent for the resin, casting the resulting casting dope onto a surface, and gelling the so-cast film by phase-inversion casting utilizing the wet method by passing the film or nascent membrane through a quenching liquid characterised in that the pore modifying agent is selected from aliphatic alcohols with the proviso that polyhydric alcohols are excluded, aliphatic amines, aliphatic ethers, alicyclic ethers, dioxane, methyl isobutyl ketone, nitropropane, and methoxyethanol, that the casting dope is a dispersion prepared by (i) adding the pore modifying agent to the homogeneous solution of the resin in an amount of from 40 to 150% of the weight of the solution and in an amount sufficient to permit the casting of a porous _membrane exhibiting a mean pore site within the range of 0.05 to 3.0 µm but less than that which forms visually apparent turbidity and (ii) thereafter adding a precipitant, which is substantially miscible with the solvents already present and is selected from butyl acetate, aliphatic hydrocarbons, trichlorofluoroethane, methoxyethane, carbon tetrachloride, ethylene glycol, and water, in an amount of from 5 to 40% of the dispersion and sufficient to form a visibly turbid solution which will not separate at a moderate degree of mixing.

2. A process according to claim 1, characterised in that the dispersion contains 5 to 8.5 weight percent polyamide.

3. A process according claim 1 or claim 2 characterised in that the polyamide in the dispersion consists essentially of 5 to 7 weight percent of aramid resin and a mean pore size of the cast membrane is within the range of 0.1 to 0.5 µm.

4. An integrally skinned, porous, fully aromatic polyamide membrane prepared by a process according to any one of claims 1 to 3 and having a porous skin portion having a mean pore diameter within the range of 0.05 to 3 µm and a support portion containing pores interconnecting with the skin pores, the pores in the support portion increasing in size as their distance from the skin portion increases, such that the average diameter of the largest pores is from 10 to 300 times the diameter of the skin pores.

## Patentansprüche

1. Verfahren zum Gießen einer Membran, die ein vollaromatisches Polyamidharz umfaßt, welches das Herstellen eines Zusatzmittels (Dope) anhand der Schritte umfaßt, die folgendes umfassen: Bilden einer homogenen Lösung aus dem Harz in einem Amidlösungsmittel, das ein anorganisches Lösungshilfsmittel enthält und Zufügen dazu eines Porenmodifikationsmittels, welches eine organische Flüssigkeit ist, die im wesentlichen mit der Lösung mischbar ist, aber ein Nichtlösungsmittel oder ein schlechtes Lösungsmittel für das Harz ist, Gießen des sich ergebenden Gießzusatzmittels auf eine Oberfläche und Gelieren des so gegossenen Films durch Phasenumkehr-Gießen, das sich das Naßverfahren zunutze macht, indem der Film oder die naszierende Membran durch eine Abschreckflüssigkeit geleitet wird, dadurch gekennzeichnet, daß das Porenmodifikationsmittel, unter aliphatischen Alkoholen (unter der Voraussetzung, daß mehrwertige Alkohole ausgeschlossen werden), aliphatischen Aminen, aliphatischen Ethern, alizyklischen Ethern, Dioxan, Methylisobutylketon, Nitropropan und Methoxyethanol ausgewählt wird, daß das Gießzusatzmittel eine Dispersion ist, die durch (1) Zufügen des Porenmodifikationsmittels zu der homogenen Lösung des Harzes in einer Menge von 40 bis 150 Gew.-% der Lösung und in einer Menge, die ausreicht, um das Gießen einer porösen Membran zu erlauben, die eine mittlere Porengröße in dem Bereich von 0,05 bis 3,0 µm, aber weniger als die aufweist, welche visuell erkennbare Trübung bildet und (ii) danach Zufügen eines Präzipitationsmittels, welches im wesentlichen mit den bereits vorliegenden Lösungsmitteln mischbar ist und aus Butylacetat, aliphatischen Kohlenwasserstoffen, Trichlorfluorethan, Methoxyethan, Kohlenstofftetrachlorid, Ethylenglycol ausgewählt werden und Wasser, in einer Menge von 5 bis 40% der Dispersion und genügend, um eine sichtbar trübe Lösung zu bilden, die sich bei einem moderaten Mischungsgrad nicht trennt.

2. Verfahren nach Anspruch 1, dadurch gekennzeichnet, daß die Dispersion 5 bis 8,5 Gew.-% Polyamid enthält.

3. Verfahren nach Anspruch 1 oder 2, dadurch gekennzeichnet, daß das Polyamid in der Dispersion im wesentlichen aus 5 bis 7 Gew.-% Aramid-Harz besteht und eine mittlere Porengröße der Gußmembran sich in dem Bereich von 0,1 bis 0,5 µm bewegt.

4. Poröse, vollaromatische Polyamidmembran mit integraler Haut, die durch ein Verfahren nach einem der Ansprüche 1 bis 3 hergestellt wird und einen porösen Hautteil mit einem mittleren Porendurchmesser in dem Bereich von 0,05 bis 3 µm aufweist und einen Stützteil mit Poren, die mit den Hautporen verbunden sind, wobei die Poren in dem Stützteil größenmäßig zunehmen, wie ihr Abstand von dem Hautteil dergestalt zunimmt, daß der durchschnittliche Durchmesser der größten Poren das 10- bis 300fache des Durchmessers der Hautporen beträgt.

## Revendications

1. Un procédé de moulage d'une membrane comportant une résine polyamide totalement aromatique qui comporte la production d'un agent dopant au moyen d'étapes incluant la formation d'une solution homogène de la résine dans un solvant d'amide contenant un facilitateur inorganique de solubilisation, et l'ajout, à cette solution, d'un agent modificateur de pores qui est un liquide organique et qui est essentiellement miscible dans la solution, mais est un non-solvant ou un mauvais solvant de la résine, le moulage de l'agent dopant de moulage résultant sur une surface et la gélification du film ainsi moulé par moulage à inversion de phase, en utilisant la voie humide en faisant passer le film ou la membrane naissante à travers un liquide de refroidissement brusque, caractérisé en ce que l'agent modificateur de pores est sélectionné à partir d'alcools aliphatiques avec la condition que les alcools polyvalents sont exclus, d'amines aliphatiques, d'éthers aliphatiques, d'éthers alicycliques, de dioxane, de méthylisobutylcétone, de nitropropane et de méthoxyéthanol, en ce que l'agent dopant de moulage est une dispersion préparée par (i) ajout de l'agent modificateur de pores à la solution homogène de la résine en une quantité de 40 à 150% du poids de la solution et en une quantité suffisante pour rendre possible le moulage d'une membrane poreuse présentant une grosseur moyenne des pores comprise dans la plage de 0,05 à 3,0 µm, mais inférieure à celle qui forme une turbidité visuellement apparente et (ii) ajout ultérieur d'un précipitant qui est substantiellement miscible avec les solvants déjà présents et qui est sélectionné parmi l'acétate butylique, les hydrocarbures aliphatiques, le trichlorofluoréthane, le méthoxyéthane, le tétrachlorure de carbone, l'éthylèneglycol et l'eau, en une quantité de 5 à 40% de la dispersion et en une quantité suffisante pour former une solution visiblement turbide qui ne va pas se séparer à un degré modéré de mélange.

2. Un procédé selon la revendication 1, caractérisé en ce que la dispersion contient 5 à 8,5 pour cent en poids de polyamide.

3. Un procédé selon la revendication 1 ou la revendication 2, caractérisé en ce que le polyamide contenu dans la dispersion se compose essentiellement de 5 à 7 pour cent en poids de résine aramide et en ce que la grosseur moyenne des pores de la membrane moulée demeure dans la plage de 0,1 à 0,5 µm.

4. Une membrane de polyamide totalement aromatique, poreuse, à peau intégrée, préparée selon un procédé conforme à l'une quelconque des revendications 1 à 3, et ayant une portion de peau poreuse dont le diamètre moyen des pores est compris dans la plage de 0,05 à 3 µm et une portion de support qui contient des pores interconnectés avec les pores de la peau, la dimension des pores de la portion de support augmentant en fonction de l'augmentation de leur distance par rapport à la portion de peau, de telle manière que le diamètre moyen des pores les plus grands est égal à 10 à 300 fois le diamètre des pores de la peau.
